# EUROPEAN PATENT SPECIFICATION

(11) **EP 2 926 400 B1**
(45) Date of publication and mention of the grant of the patent: **20.03.2019**
(21) Application number: 12806700.6
(22) Date of filing: 30.11.2012
(51) Int. Cl.: H01M 8/18, H01M 8/20

(54) **BACK PLATE-ELECTRODE-MEMBRANE ASSEMBLY FOR A REDOX, FLOW ENERGY STORAGE ELECTROCHEMICAL CELL**
RÜCKPLATTENELEKTRODEN-MEMBRANANORDNUNG FÜR EINE REDOXFLUSSENERGIESPEICHERNDE ELEKTROCHEMISCHE ZELLE
ENSEMBLE EMBASE-ÉLECTRODE-MEMBRANE DESTINÉ À UNE PILE ÉLECTROCHIMIQUE D'OXYDORÉDUCTION POUR LE STOCKAGE D'ÉNERGIE DE FLUX

(43) Date of publication of application: 07.10.2015
(73) Proprietor: Hydraredox Technologies Holdings Ltd., Wirral CH49 OAB (GB)
(72) Inventor: SPAZIANTE, Placido Maria, Bangkok 10330 (TH); DICHAND, Michael, A-4865 Nussdorf (AT)
(74) Representative: Montelatici, Linda Anna
(86) International application number: PCT/IB2012/056848
(87) International publication number: WO 2014/083387

(56) References cited:
- WO-A1-01/03224
- WO-A1-2011/148198

## Description

### BACKGROUND OF THE DISCLOSURE

### 1. TECHNICAL FIELD

This invention relates to electrochemical reactors for conducting reduction and oxidation reactions in respective positive and negative liquid electrolytes, without gas evolution at the electrodes. More specifically the invention relates to a membrane-separated, multi-cell electrochemical reactor for implementing a redox flow energy storage system.

### 2. DESCRIPTION OF RELATED ART

Redox flow battery systems are increasingly attracting interest as efficient energy conversion systems. Among the numerous redox couple candidates, the all vanadium redox system being one of the most preferred.

Structurally, the electrochemical reactors that have been proposed for redox flow battery systems, have been derived from the electrochemical reactor structures developed for general electrolysis processes, the only adaptation having concerned the materials employed as electrodes.

The documents GB-A-2,030,349, US-A-4,786,567, WO99/39397, WO01/03213, WO01/03224, WO01/76000, WO02/15317, WO03/003483, WO03/007464, WO03/043170, WO2004/079849, EPRI, Technical Update Report, "Vanadium Redox Flow Batteries" (An In-depth analysis), ©-2007 - Electric Power Research Institute, Inc., US-2012/0156535-A1; WO2012/001446, WO2012/020277, WO2012/032368, WO2012/042288, offer an ample review of the state of the art

Typically, in redox flow storage systems besides absence of any gas evolution (H₂, O₂ or other elements) at the electrodes, apart from minor accidental parasitic occurrences that must be absolutely be prevented or held at negligible levels, the electrodes themselves are chemically inert (i. e. do not undergo any modification at their surface wetted by the electrolyte solution). These conditions make mass transport of the redox process supporting ions to active electrode sites a most critical parameter, together with electrochemical and physical characteristics of the wetted surface of the electrode material, that affects the dynamics of ion oxidation and reduction at the respective electrodes of the electrochemical cell. For many of these systems, for example for the all vanadium (V/V redox flow cell systems and similar systems (Fe/V, V/Br, Cr/Fe, Zn/Ce, Polysulfide/Br), for economically acceptable current densities to be supported, porous and fluid permeable electrodes are necessary.

Moreover, chemical inertness of the electrode materials that need to be retained when switching from cathodic polarization to anodic polarization during a cycle of charging and discharging of the redox storage system, and the requisite of having a relatively high H⁺ discharge overvoltage when positively polarized in respect to the electrolyte solution and a high OH⁻ discharge overvoltage when negatively polarized in respect to the electrolyte solution obliges to use carbon base electrodes.

A typical stack cell assembly contemplates a fluid impervious perm-ionic membrane cell separator, identical porous and fluid permeable carbon felt electrodes on both sides of the membrane separator in electrical contact with respective carbon base electrically conductive back plates, defining, together with non conductive frames (commonly made of plastic), respective flow compartments of the positive electrolyte solution and of the negative electrolyte solution, respectively.

The conductive back plate most often is an intercell separator element according to the common architectural approach of a bipolar stack of a plurality of cell in electrical series between the two end elements. According to an alternative architectural approach (WO 2004/079849), the conductive back plates of a multicell stack assembly separate the flow compartments of same sign of a plurality of interleaved, two face electrodes, electrically connected in parallel.

Mass transport to the electrodes must be assisted by a forced flow of the two electrolyte solutions through the respective porous electrode compartments. Of course, the pumping of electrolyte solutions represents "passive power" that significantly detracts from the overall power yield of every complete cycle of energy storage.

Generally, redox flow storage systems because of their peculiarity of not directly tying storage capacity to the size of the electrochemical reactors, are ideally suited for large storage facilities of electrical grid operators that must manage an increasingly great quota of discontinuous renewable energy sources connected to the grid like photovoltaic and wind power generators.

Nevertheless, large power ratings inevitably call for large cell (i.e. projected electrode area) being the maximum current density of operation of the cells limited by factors affecting the dynamics of ion charge and discharge reactions at the electrodes and the internal voltage drop due to the electrical cell resistance that tends to steeply increase at excessively high current densities.

The forced flow rate of the electrolyte solutions is increased when the current density increases or when the cell voltage drops in order to enhance the reaction dynamics at the electrodes by increasing irrigation of the porous mass of the partly compressed carbon felts though spending more power (passive power).

Normally the electrolyte solution enters the cell compartment through one or more inlet ports distributed along one side of a generally rectangular non conductive frame or a non conductive (unloaded plastic) frame portion of a molded back plate having a central portion (cell area) made of a moldable carbon loaded conductive aggregate, and exits the flow compartment through one or more outlet ports distributed along the opposite side of the non conductive frame. The pump assisted circulation forces the solution through the pervious carbon felt electrode that substantially fills the whole cell area in order not to leave any by-pass flow paths unobstructed by the partly compressed felt.

A partial compression of the felt electrode between the perm-ionic membrane cell separator and the electrically conductive back plate, though increasing pressure drop, remains necessary for maintaining ad adequate electrical contact over the whole cell area that should promote a substantial equipotentiality of the working electrode, notwithstanding attempts to provide for a good contact in other ways.

Incidence of so many contrasting requisites and severe constraints on the choice of usable conductors because of electrochemical and chemical resistance considerations, has left the practitioner battling with the intrinsic non homogeneity of the compressed felt in terms of permeability (resistance to the liquid stream) that inevitably creates preferential flow paths through the porous electrode mass leaving portions of the electrode become "starved" of reducible (or oxidable) ions causing other portions to work at proportionately incremented current density and thence begin themselves to starve, in a unpredictably varying fashion. Over pumping the electrolyte solutions, besides dramatically lowering energy efficiency, seldom cures the problem and under certain conditions may even become ineffective.

Dramatically lowering the maximum rated current density of the cells may significantly lessen these problems, but the increased cell area requirement that has a major impact on investment may render competitively uneconomical the choice of a redox flow system.

In WO 01/03224 it is proposed to define in the porous electrode two orders of parallel flow channels, all the parallel spaced channels of each order extend from a common orthogonal base channel formed along the respective inlet or outlet side of the chamber and terminate short of reaching the base channel of the other order. Each order defines a comb-shaped flow distributing channel-work the parallel fingers of which interleave with the finger channels of the other order.

Although the cutting of the carbon felt to define two orders each having a comb-like layout, of interleaved narrow parallel channels significantly reduces pressure drop and enhances evenness of distribution of fresh electrolyte solution over the whole cell areas, the available volume of active carbon felt per unit cell area is dramatically reduced by the patterning of the felt. Moreover, the narrow parallel strips of the patterned carbon felt loose ability to elastically react to the necessary compression and the quality of electrical contact with the back plate degrades rapidly to an intolerably poor grade. Erratic slanting-collapsing and local deformation of the parallel strips of carbon felt cause an extensive loss of electrode activity in certain zones of the cell area accompanied by overload effects in others.

### SUMMARY OF THIS DISCLOSURE

To these unresolved problems plaguing the art of redox flow storage systems the applicant has found a novel conductive back plate - electrode - membrane assembly that overcomes the drawbacks of prior proposals and significantly alleviate or eliminate the above discussed effects of non homogeneity of elastically compressed carbon felt electrodes in terms of permeability to a forced liquid flow and of excessive passive power requirement for adequately irrigating the porous electrodes with fresh electrolyte solution, without detracting from the ability to ensure a good electrical contact between the felt electrode and the conductive back plate.

According to an essential aspect, a generally rectangular contact area of the electrically conductive back plate is provided with a first plurality of spaced parallel sinuous open channels that originate from an inlet manifolding channel extending along one side of the area into which the electrolyte solution enters the cell compartment through one or more inlet ports. The sinuous channels terminate short of reaching an outlet manifolding channel extending along the opposite side of the channeled area, from which the electrolyte solution exits the cell compartment through one or more outlet ports. Vice versa, a second plurality of spaced parallel sinuous open channels, interleaved to the channels of said first plurality, that originate from the outlet manifolding channel, terminate short of reaching the inlet manifolding channel.

The whole contact area of the conductive back plate is thus provided with interleaved open channels of distribution and open channels of drainage of the pumped electrolyte solution in the whole extent of the working area of the cell, that are capped by the carbon felt electrode laid and elastically compressed over the channeled contact area.

The relative narrowness and sinuosity of the channels has been found to prevent any significant sagging of the compressed felt into the intermeshed flow channels and no detectable increase of contact resistance at the contemplated current densities of operation of the cell could be observed. On the contrary a significant reduction of overall internal cell resistance at varying working conditions has been consistently observed, while an outstanding saving of passive power for circulating the two electrolyte solutions has been achieved specially when operating close to the rated maximum current density.

The optional feature of making through holes with diameter equal to or larger than the width of the channels of the interleaved sinuous channel-works in the contact area of the conductive back plate and spaced along a sinuous track line in the carbon felt electrode, such to be in coincidence with an underlying electrolyte solution distribution channel or with an underlying electrolyte solution drainage channel, respectively, further enhances performance when operating close to the rated maximum current density.

### BRIEF DESCRIPTION OF THE DRAWINGS

**Fig. 1** is a tridimensional exploded detail view of the novel back plate-carbon felt-membrane assembly of this disclosure, according to an exemplary embodiment.
**Fig. 2** is a general schematic tridimensional exploded view of a stack of three monopolar cells with the back plate-carbon felt- membrane assembly of Fig. 1.
**Fig. 3** is a cross sectional view of the "filter-press" tightened three cell stack of Fig. 2, showing the positive electrolyte solution distribution ports, in and out of a respecting positive electrode flow compartments of the three cells.
**Fig. 4** is a cross sectional view of the "filter-press" tightened three cell stack of Fig. 2, showing the negative electrolyte solution distribution ports, in and out of a respecting negative electrode flow compartments of the three cells.

### DESCRIPTION OF THE EMBODIMENT ILLUSTRATED IN THE DRAWINGS

The embodiment shown is for a multi-cell stack of monopolar cells application, accordingly every electrically conductive back plate has at least one tag-like protrusion projecting out of a contouring compartment frame of non conductive plastic for externally connecting the back plate to a DC rail of correspondent sign. As will be immediately obvious to the skilled person, the novel back plate-carbon felt- membrane assembly of this disclosure is equally useful for a multi-cell stack of bipolar cells application, according to which every electrically conductive back plate does not need any tag-like protrusion projecting out of the contouring compartment frame of non conductive plastic, whilst it must ensure a leak-proof seal with it (or be integrally molded with a non conductive frame portion) in order to prevent any intermixing between the two electrolyte solutions that, differently from the shown monopolar cell application, are respectively flown in the compartments separated by the back plate.

Thus the ensuing description of the back plate-carbon felt- membrane assembly of this disclosure remains valid *mutatis mutandis* for both types of application.

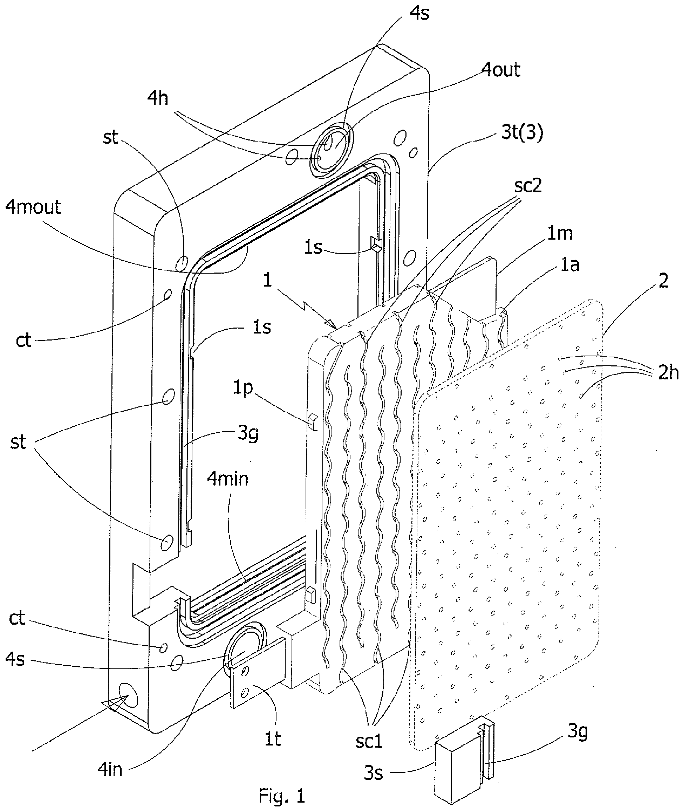

**Fig. 1** highlights the features of the novel assembly.

The conductive back plate 1 must have an electrical current carrying cross section and conductivity adequate to ensure equipotentiality of DC current distribution or collection to and from the porous fluid permeable carbon felt electrode 2, pressed against the conductive surface of the back plate 1. Therefore, for the monopolar cell embodiment considered, the carbon base back plate may have, as shown, a metallic core 1m, completely sunk inside a molded body 1a of an electrically conductive aggregate of graphite and/or carbon powder and of a resin binder. The metallic core 1m emerges out of the molded body 1a only at the end of the tag projection It (outside of the flow compartments, thus unaffected by the generally acid electrolyte solutions) for establishing a good contact with a metal rail (not shown in the drawing). Hydraulic seal around the perimeter of every flow compartment of the "filter-press" multi-cell stack architecture of the considered embodiment, is provided by counter-opposed O-rings pressing on the fluid impervious perm-ionic membrane separator of the two flow compartments of every cell. In the detail view of Fig. 1, is observable the groove 3g adapted to receive the respective O-ring. A segment 3s of the grooved frame front is glued over the inner portion of the tag projection It and a filler finishing restores continuity of the O-ring groove around the whole perimeter of the flow compartment.

In the embodiment shown, the back plate 1 fits snuggly inside a contouring frame 3 (3t), that may be of non conductive molded plastic, in consideration of the fact that no hydraulic seal between the homologous flow compartments (of same sign) on the opposite faces of the back plate is required. Keying pins 1p and cooperating sockets 1s in the inner flanks of the frame set and keep the back plate in place. Practically, in a monopolar multi cell stack arrangement, the externally connected conductive back plate 1 has the function of a current distributor or collector to and from homologous carbon felt electrodes 2 that are contacted over its opposite faces.

The internal ducting of the electrolyte solution that flows through the homologous (same sign) electrode compartments at the two sides of the back plate 1 is observable in the detail view of **Fig. 1****.** The electrolyte stored in a tank is pumped through one duct and flows back to the tank through the other duct, in the drawing, the internal ducts 4in and 4out, respectively, that typically extend for the whole multi-cell stack assembly, traversing the sequence of plastic frames, hydraulic seal being provided by O-rings held in circular grooves 4s.

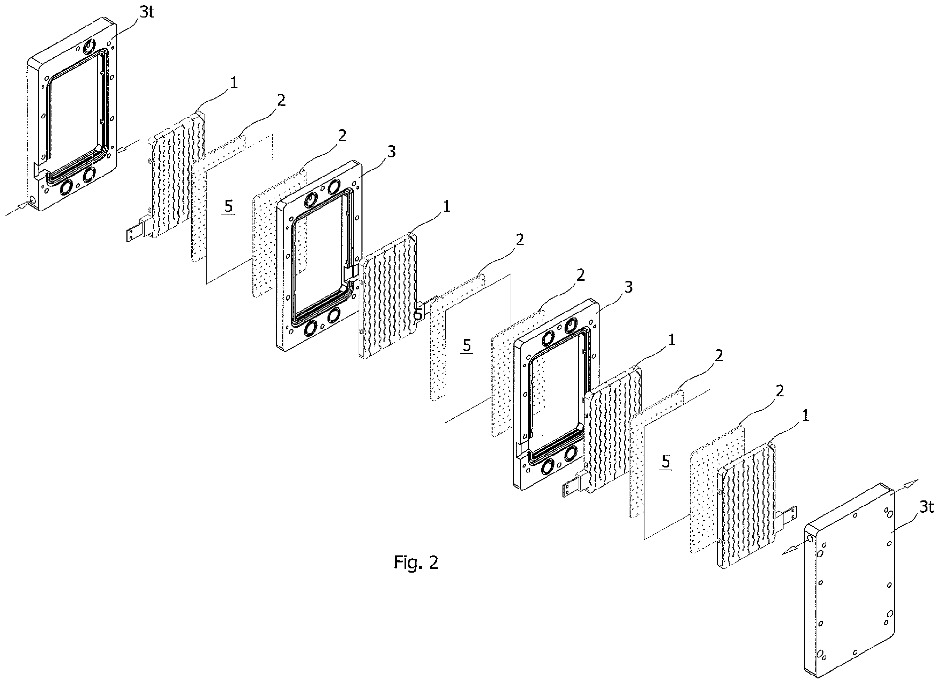

One or more transversal holes 4h, drilled in the plastic frame provide inlet ports and outlet ports, respectively, to and from the flow compartments over the two sides of the back plate 1. The port holes hydraulically connect the internal ducts, 4in and 4out pertaining to either the negative or positive electrolyte solution of the considered two electrode flow compartment of a monopolar cell (e. g. the first flow compartment of the three cell stack of Figs. 2, 3 and 4), to a respective manifolding flow space 4min (and 4mout not visible in Fig. 1) that extends along the whole inner side of the generally rectangular frame.

Practically the streaming electrolyte solution entering the cell finds a space, 4min, in which distributing itself (inlet manifold) along one side of the rectangular back plate 1 and the streaming liquid finds a similar space in which collecting itself (outlet manifold) at the opposite side of the rectangular back plate 1, on its way out of the cell through the outlet port holes 4h and the outlet duct 4out.

As may be observed on the visible side of the back plate 1, a first plurality of spaced parallel sinuous channels, sc1, start from the bottom edge of the plate, practically from the inlet manifolding space or channel 4min, along the bottom side of the rectangular cell area (i.e. of contact of the current distributing back plate with the felt electrode 2) and terminate short of reaching the similar outlet manifolding space or channel 4mout, along the top edge of the plate 1 (i.e. of the area of contact of the current distributing back plate with the carbon felt electrode 2) and of the top side of the rectangular flow compartment. A second plurality of spaced parallel sinuous channels, sc2, interleaved with the sinuous channels sc1, start from the top edge of the back plate 1, practically from the outlet manifolding space or channel 4mout, along the top side of the rectangular cell area (i.e. of contact of the current distributing back plate 1 with the felt electrode 2) and terminate short of reaching the similar inlet manifolding space or channel 4min, along the bottom edge of the plate 1 (i.e. of the area of contact of the current distributing back plate 1 with the carbon felt electrode 2) and the bottom side of the rectangular flow compartment.

Therefore, each inlet stream distribution or "source" flow channel sc1 is "separated" from the two adjacent outlet stream or "drain" flow channels by sinuous strip portions of a certain constant width of the porous fluid pervious carbon felt electrode that is compressed against the planar surface of the current distributing back plate 1.

In this way, the electrolyte solution is forced to pass through the width of the sinuous strip portions of porous felt for reaching a drain channel. Thus the effect of the interleaved source and drain flow channels is to uniformly distribute the electrolyte over the whole electrode area and promote a constant and uniform refreshing of the electrolyte that wets the porous mass of carbon fibers with a reduced pressure drop.

Differently from prior techniques, the available effective surface area of the wetted electrode in no longer sacrificed by cutting off strips of the carbon felt. Moreover, the felt retains its full resilience and elastic reaction to the partial compression it must be subjected for ensuring a low contact resistance with the planar surface of the conductive carbon base back plate.

Sinuosity of the interleaved source and drain channels has been found effective in preventing localized sagging of the compressed carbon fiber felt electrode into the underlying channels cut in the planar surface of the conductive carbon base back plate. This may be due to the fact that commercial carbon fiber felts possess a certain anisotropy of mechanical properties typical of textile mats that make the surface layers more resistant to sagging than the bulk material. Generally, the sinuous channels, open at the top, may have a width comprised between 1 and 4 mm, a sinuosity of wavelength comprised between 1 and 4 cm and a depth comprised between 1 and 4 mm, although they may be even larger dimensions.

Optionally, through holes 2h of diameter equal to or larger than the width of the underlying channels cut in the planar surface of the back plate 1, may be formed in the carbon felt electrode 2, spaced from each other, each coincident with either an underlying source or drain channel when laying the felt electrode 2 onto the area of contact with the conductive back plate 1. Generally, this further enhances performance by bringing part of the fresh electrolyte solution to flow through the porous mass of carbon fibers of the felt electrode nearer to the perm-ionic cell separator (not shown in the detail view of **Fig.1**). It should be remarked that the described assembly is replicated on the other (non visible) side.

The through holes ct in the frame are for pre-assembling bolts of the elements that compose a single cell and the through holes st are for the passage of tie rods that press together the pre-assemblies to form the complete multi-cell stack.

**Fig. 2** provides a complementary illustration of the general arrangement for a three cell stack, the perm-ionic cell separators of which are indicated with 5. Differently from the two intermediate assemblies of the respective frames 3, the two end frames 3t are blind and respectively accommodate end back plates 1 that distribute the current only to one felt electrode 2, and respectively have inlet or outlet ports (symbolically indicated by arrows heads) for the necessary pump assisted circulation of the two distinct electrolyte solutions in the multi-cell stack assembly.

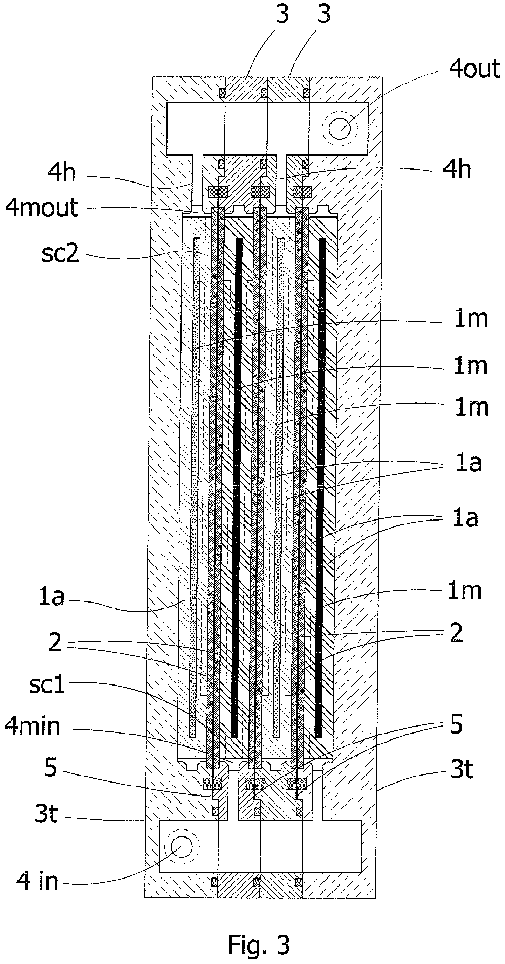

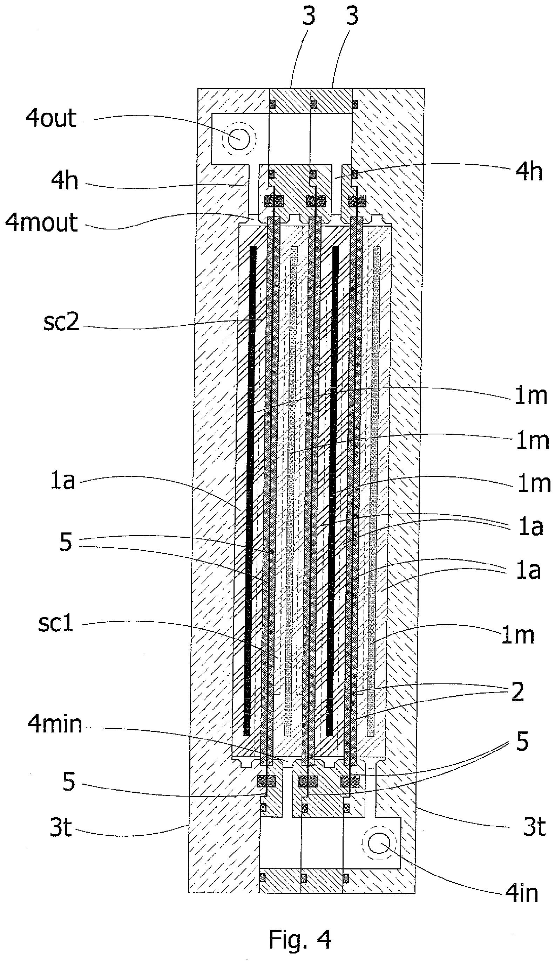

The features of the back plate-carbon felt- membrane assembly of this disclosure highlighted in the detail view of **Fig. 1** and exploded view of **Fig. 2**, may be observed in their proper functional interaction when the three cell stack is tightened in a typical "filter press" fashion in the two cross sectional view of **Fig. 3** and **Fig. 4****,** where the distinct flow paths of the negatively charged electrolyte solution and of the positively charged electrolyte solution may be followed through their respective flow compartments of the three monopolar cells, the perm-ionic separators 5 of which are indentified. The alternated different tonalities of the metallic cores 1m of the four back plates 1 indicate the different signs of the contacted felt electrodes 2. of the three cells.

## Claims

1. A back plate-electrode-membrane assembly for a redox flow electrochemical cell comprising:
- a positive electrode flow compartment of an electrolyte solution of a first ion couple of a multi valence element, and
- a negative electrode flow compartment of an electrolyte solution of a second ion couple of a multi valence element, functionally different from the first ion couple,
- porous carbon felt electrodes (2);
- fluid impervious perm-ionic separators (5) of a positive electrode flow compartment from a negative electrode flow compartment;
- -electrically conductive back plates (1) of the electrode flow compartments having a planar area of contact with the porous carbon felt electrodes (2);
- each porous carbon felt electrode (2) being compressively held between a fluid impervious perm-ionic separator (5) and a planar area of contact of an electrically conductive back plate (1),
**characterized in that**
a first plurality of spaced parallel sinuous channels (sc1) start from an inlet manifolding flow space (4min) at one side of said area of contact of the back plate (1) and terminate short of reaching an outlet manifolding flow space (4mout) at the opposite side of said area of contact of the back plate (1);
a second plurality of spaced parallel sinuous channels (sc2), interleaved to the channels (sc1) of said first plurality, start from said outlet manifolding flow space (4mout) at said opposite side of said area of contact of the back plate (1) and terminate short of reaching said inlet manifolding flow space (4min).

2. The assembly of claim 1, further comprising through holes (2h) in said carbon felt electrode (2) of diameter equal to or larger than the width of the channels (sc1, sc2) of said first and second plurality of spaced parallel sinuous channels (sc1, sc2), spaced from each other, each hole (2h) coinciding with either an underlying channel (sc1) of said first plurality or (sc2) of said second plurality upon laying the felt electrode (2) onto the area of contact with the conductive back plate (1).

3. The assembly of claim 1, wherein said back plate (1) is a current distributor to two felt electrodes (2) of same polarity or sign, respectively in contact with similarly channeled opposite surfaces of the current distributor of a multi monopolar cell stack.

4. The assembly of claim 1, wherein said back plate (1) is a current distributor to two felt electrodes (2) of opposite polarity or sign in contact with similarly channeled opposite surfaces thereof and constitutes an electrically conductive intercell separator of a multi bipolar cell stack.

5. The assembly of claim 1, wherein at least said channeled portion or portions (1a) of the back plate (1) are of a conductive aggregate of carbon and of a resin binder.

6. The assembly of claim 5, wherein the back plate (1) comprises a metallic core (1m).

7. The assembly of claim 6, wherein said metallic core (1m) is in form of either a solid plate, an expanded metal sheet or metal wire mesh.

8. The assembly of claim 6, wherein said metallic core (1m) has at least an integral tag portion (1t) protruding out of the perimeter of the back plate (1), adapted to form an externally connectable electrical terminal of the contacted felt electrode or electrodes (2).

## Patentansprüche

1. Eine Rückwand-Elektroden-Membran-Baugruppe für eine elektrochemische Redox-Fluss-Zelle, umfassend:
- eine positive Elektrodenkammer für den Durchfluss einer Elektrolytlösung eines ersten Ionenpaars eines Elements mit mehreren Valenzen, und
- eine negative Elektrodenkammer für den Durchfluss einer Elektrolytlösung eines zweiten Ionenpaars eines Elements mit mehreren Valenzen, das sich funktionell von dem ersten Ionenpaar unterscheidet,
- poröse Elektroden (2) aus Carbonfaserfilz;
- fluidundurchlässige, ionendurchlässige Einrichtungen (3) zur Trennung einer positiven Elektroden-Durchflusskammer von einer negativen Elektroden-Durchflusskammer;
- elektrisch leitende Rückwände (1) der Elektroden-Durchflusskammern, umfassend einen ebenen Kontaktbereich zu den poröse Carbonfilz-Elektroden (2);
- wobei jede poröse Carbonfilz-Elektrode (2) zwischen einer fluidundurchlässigen, ionendurchlässigen Trenneinrichtung (3) und einem ebenen Kontaktbereich einer elektrisch leitenden Rückwand (1) zusammengedrückt gehalten wird,
**dadurch gekennzeichnet, dass**
eine erste Mehrzahl von voneinander beabstandeten, parallelen, gewundenen Kanälen (sc1) an einem Einlass-Verteiler-Durchflussraum (4min) an einer Seite des besagten Kontaktbereichs der Rückwand (1) beginnt und vor dem Erreichen eines Auslass-Sammler-Durchflussraums (4mout) an der gegenüber liegenden Seite des besagten Kontaktbereichs der Rückwand (1) endet;
eine zweite Mehrzahl von voneinander beabstandeten, parallelen, gewundenen Kanälen (sc2), verschränkt mit den Kanälen (sc1) der ersten Mehrzahl, an dem besagten Auslass-Sammler-Durchflussraums (4mout) an der gegenüber liegenden Seite des besagten Kontaktbereichs der Rückwand (1) beginnt und vor dem Erreichen des besagten Einlass-Verteiler-Durchflussraums (4min) endet.

2. Die Baugruppe nach Anspruch 1, ferner umfassend voneinander beabstandete Durchgangslöcher (2h) in der besagten Carbonfilzelektrode (2) mit einem Durchmesser gleich oder größer als die Breite der Kanäle (sc1, sc2) der besagten ersten und zweiten Mehrzahl von beabstandeten, parallelen, gewundenen Kanälen (sc1, sc2), wobei jedes Loch (2h) entweder mit einem unterlagerten Kanal (sc1) der ersten Mehrzahl oder (sc2) der besagten zweiten Mehrzahl zusammentrifft, sobald die Filzelektrode (2) auf den Kontaktbereich der leitenden Rückwand (1) gelegt wird.

3. Die Baugruppe nach Anspruch 1, wobei die besagte Rückwand (1) ein Stromverteiler für zwei Filzelektroden (2) von gleicher Polarität bzw. Vorzeichen ist, jeweils in Kontakt mit in gleichem Maße mit Kanälen versehenen, gegenüber liegenden Oberflächen des Stromverteilers eines Mehrfach-Stapels monopolarer Zellen.

4. Die Baugruppe nach Anspruch 1, wobei die besagte Rückwand (1) ein Stromverteiler für zwei Filzelektroden (2) von unterschiedlicher Polarität bzw. Vorzeichen ist, welche sich in Kontakt mit in gleichem Maße mit Kanälen versehenen, gegenüber liegenden Oberflächen davon befinden, und eine elektrisch leitende Zwischenzellen-Trenneinrichtung eines Mehrfachstapels bipolarer Zellen bildet.

5. Die Baugruppe nach Anspruch 1, wobei die besagten, mit Kanälen versehenen Bereiche (1a) der Rückwand (1) aus einem leitfähigen Aggregat von Kohlenstoff und einem Harzbinder bestehen.

6. Die Baugruppe nach Anspruch 5, wobei die Rückwand (1) einen metallischen Kern (1m) aufweist.

7. Die Baugruppe nach Anspruch 6, wobei der besagte metallische Kern (1m) entweder von der Form einer festen Platte ist, oder eines Streckmetallbleches, oder eines Metalldrahtgeflechts.

8. Die Baugruppe nach Anspruch 6, wobei der besagte metallische Kern (1m) wenigstens einen aus dem Umfang der Rückwand (1) hervorstehenden, integrierten Laschenbereich (1t) aufweist, der dafür geeignet ist, einen extern verbindbaren, elektrischen Anschluss der kontaktierten Filzelektrode oder -elektroden (2) zu bilden.

## Revendications

1. Ensemble embase-électrode-membrane pour une pile électrochimique d'oxydoréduction de flux comprenant :
- un compartiment d'écoulement d'électrode positive d'une solution d'électrolyte d'une première paire d'ions d'un élément multivalent, et
- un compartiment d'écoulement d'électrode négative d'une solution d'électrolyte d'une seconde paire d'ions d'un élément multivalent, fonctionnellement différente de la première paire d'ions,
- des électrodes de feutre de carbone poreux (2) ;
- des séparateurs permioniques imperméables au fluide (5) d'un compartiment d'écoulement d'électrode positive par rapport à un compartiment d'écoulement d'électrode négative ;
- des embases électriquement conductrices (1) des compartiments d'écoulement d'électrode ayant une zone de contact plane avec les électrodes de feutre de carbone poreux (2) ;
- chaque électrode de feutre de carbone poreux (2) étant maintenue par compression entre un séparateur permionique imperméable au fluide (5) et une zone de contact plane d'une embase électriquement conductrice (1),
**caractérisé en ce que** :
une première pluralité de canaux sinueux parallèles espacés (sc1) commencent à partir d'un espace d'écoulement de raccordement d'entrée (4min) d'un côté de ladite zone de contact d'embase (1) et se terminent avant d'atteindre un espace d'écoulement de raccordement de sortie (4mout) du côté opposé de ladite zone de contact de l'embase (1) ;
une seconde pluralité de canaux sinueux parallèles espacés (sc2), entrelacés avec les canaux (sc1) de ladite première pluralité, commencent à partir dudit espace d'écoulement de raccordement de sortie (4mout) du côté opposé de ladite zone de contact d'embase (1) et se terminent avant d'atteindre ledit espace d'écoulement de raccordement d'entrée (4min).

2. Ensemble selon la revendication 1, comprenant en outre des trous débouchants (2h) dans ladite électrode de feutre de carbone (2) de diamètre égal ou supérieur à la largeur des canaux (sc1, sc2) desdites première et seconde pluralités de canaux sinueux parallèles espacés (sc1, sc2), espacés les uns des autres, chaque trou (2h) coïncidant avec un canal sous-jacent (sc1) de ladite première pluralité ou (sc2) de ladite seconde pluralité après avoir posé l'électrode de feutre (2) sur la zone de contact avec l'embase conductrice (1).

3. Ensemble selon la revendication 1, dans lequel ladite embase (1) est un distributeur de courant pour deux électrodes de feutre (2) de même polarité ou de même signe, respectivement en contact avec des surfaces opposées rainurées de manière similaire du distributeur de courant d'un empilement de piles multiples monopolaires.

4. Ensemble selon la revendication 1, dans lequel ladite embase (1) est un distributeur de courant pour deux électrodes de feutre (2) de polarité opposée ou de signe opposé en contact avec leurs surfaces opposées rainurées de manière similaire et constitue un séparateur entre les piles électriquement conducteur d'un empilement de piles multiples bipolaires.

5. Ensemble selon la revendication 1, dans lequel au moins ladite partie (1a) ou lesdites parties rainurée(s) de l'embase (1) est (sont) réalisée(s) avec un agrégat conducteur de carbone et de liant de résine.

6. Ensemble selon la revendication 5, dans lequel l'embase (1) comprend un noyau métallique (1m).

7. Ensemble selon la revendication 6, dans lequel ledit noyau métallique (1m) se présente sous la forme d'une plaque pleine, d'une tôle expansée ou d'un treillis métallique.

8. Ensemble selon la revendication 6, dans lequel ledit noyau métallique (1m) a au moins une partie de cosse solidaire (1t) faisant saillie du périmètre de l'embase (1), adaptée pour former une borne électrique pouvant être extérieurement connectée de l'électrode ou des électrodes de feutre (2) en contact.
